# EUROPEAN PATENT SPECIFICATION

(11) **EP 1 054 172 B1**
(45) Date of publication and mention of the grant of the patent: **08.03.2006**
(21) Application number: 00109894.6
(22) Date of filing: 10.05.2000
(51) Int. Cl.: F16B 39/34, F16B 39/30, F16B 33/00, F16B 35/00

(54) **Plastic self-locking threaded fastener**
Mit Gewinde versehenes, selbsthemmendes Befestigungselement aus Kunststoff
Attache filetée autobloquante en matière plastique

(30) Priority: 19.05.1999 US 314150
(43) Date of publication of application: 22.11.2000
(73) Proprietor: SHIMANO INC., Osaka (JP)
(72) Inventor: Shahana, Satoshi, Osaka-shi, Osaka (JP)
(74) Representative: Herrmann-Trentepohl, Werner

(56) References cited:
- GB-A- 816 562
- US-A- 3 929 023
- US-A- 4 915 560
- US-A- 5 178 500
- US-A- 5 407 312
- US-A- 5 562 547
- DATABASE WPI Section Ch, Week 198134 Derwent Publications Ltd., London, GB; Class A32, AN 1981-61235D XP002191596 "PLASTIC BOLT PRODUCE FORMING LONG BODY RESIN BOND GLASS FIBRE COATING THERMOPLASTIC RESIN CUT HEAT PRESS THREAD" -& JP 56 082219 A (ASAHI FIBREGLASS CO), 4 July 1981 (1981-07-04)

## Description

### BACKGROUND OF THE INVENTION

### 1. Field of the Invention

This invention generally relates to a self-locking threaded fastener. More specifically, the present invention relates to a self-locking threaded fastener made of a plastic material that can be used.

### 2. Background Information

Currently, there are many different types of self-locking fasteners available on the market. These self-locking fasteners are typically utilized in devices that are subject to vibrations or the like. In the past, the shaft portion of the threaded fastener would be provided with a spring to apply an axially extending force between the threads of the fastener and the threaded hole in which the fastener is received. Also, it is known to utilize a plastic member that is attached to the member with the threaded hole in a non-rotatable manner such that the bolt or threaded fastener is threaded into a hole of the plastic member that is smaller than the outer diameters of the threads. In this way, the threaded fastener cuts threads into the plastic member such that the threaded fastener is prevented from coming out of the member with the threaded hole. An example of a device that utilizes such a plastic member is a front derailleur of a bicycle which has adjustment screws that are threaded into a plastic cover for controlling the movement of the derailleur.

It is also known in the prior art to add locking material to a metallic fastener. Examples of this type of fastener is disclosed in U.S. Patent Nos.: 2,663,344 to Burdick; 3,093,177 to Villo; 3,474,845 to Podell; 3,488,666 to Podell; and 3,568,746 to Faroni.

It is also known from prior art to use a screw which has a unthreaded portion which is fully radial surrounding the screw and axially extends only on a portion of it, as is shown in GB 816 562.

While the various prior art techniques can be effective, they suffer from many disadvantages. For example, they typically are expensive to manufacture and/or assemble. Moreover, some of these types of fasteners are difficult to manufacture. Moreover, some of these prior art fasteners do not work well after repeated threading and unthreading of the fastener.

In view of the above, there exists a need for a self-locking threaded fastener, which overcomes the above mentioned problems in the prior art. This invention addresses this need in the prior art as well as other needs, which will become apparent to those skilled in the art from this disclosure.

### SUMMARY OF THE INVENTION

One object of the present invention is to provide a self-locking threaded fastener constructed of a plastic material.

Another object of the present invention is to provide a self-locking threaded fastener that is inexpensive to manufacture.

Another object of the invention is to create a connection, which maintains its self-locking ability in favorable conditions even after operating the fastener for many times.

The foregoing objects can basically be attained by providing a self-locking threaded fastener, comprising a head portion; and a plastic shaft portion extending from the head portion to a free end, the plastic shaft portion having threads formed thereon, the threads having crests with outer diameters, roots with inner diameters, and locking material integrally formed as a one-piece, unitary part of the plastic shaft portion, the locking material extending outwardly from at least one of the roots.

These and other objects, features, aspects and advantages of the present invention will become apparent to those skilled in the art from the following detailed description, which, taken in conjunction with the annexed drawings, discloses preferred embodiments of the present invention.

### BRIEF DESCRIPTION OF THE DRAWINGS

Referring now to the attached drawings which form a part of this original disclosure:
Figure 1 is a side elevational view of a self-locking threaded fastener in accordance with a first embodiment of the present invention;
Figure 2 is a left end elevational view of the self-locking threaded fastener illustrated in Figure 1 in accordance with the first embodiment of the present invention;
Figure 3 is a side elevational view of the self-locking threaded fastener illustrated in Figures 1 and 2 in accordance with the first embodiment of the present invention, but rotated ninety degrees from Figure 1;
Figure 4 is a right end elevational view of the self-locking threaded fastener illustrated in Figures 1-3 in accordance with the first embodiment of the present invention;
Figure 5 is a side elevational view of a self-locking threaded fastener in accordance with a second embodiment of the present invention;
Figure 6 is a left end elevational view of the self-locking threaded fastener illustrated in Figure 5 in accordance with the second embodiment of the present invention;
Figure 7 is a side elevational view of the self-locking threaded fastener illustrated in Figures 5 and 6 in accordance with the second embodiment of the present invention, but rotated ninety degrees from Figure 5;
Figure 8 is a right end elevational view of the self-locking threaded fastener illustrated in Figures 5-7 in accordance with the second embodiment of the present invention;
Figure 9 is a side elevational view of a self-locking threaded fastener in accordance with a third embodiment of the present invention;
Figure 10 is a left end elevational view of the self-locking threaded fastener illustrated in Figure 9 in accordance with the third embodiment of the present invention;
Figure 11 is a side elevational view of the self-locking threaded fastener illustrated in Figures 9 and 10 in accordance with the third embodiment of the present invention, but rotated ninety degrees from Figure 9;
Figure 12 is a right end elevational view of the self-locking threaded fastener illustrated in Figures 9-11 in accordance with the third embodiment of the present invention;
Figure 13 is an end elevational view of the head portion of a self-locking threaded fastener in accordance with the fourth embodiment of the present invention;
Figure 14 is an end elevational view of the thread shaft portion of a self-locking threaded fastener in accordance with the fifth embodiment of the present invention;
Figure 15 is an end elevational view of the thread shaft portion of a self-locking threaded fastener in accordance with the sixth embodiment of the present invention; and
Figure 16 is an end elevational view of the thread shaft portion of a self-locking threaded fastener in accordance with the seventh embodiment of the present invention.

### DETAILED DESCRIPTION OF THE PREFERRED EMBODIMENTS

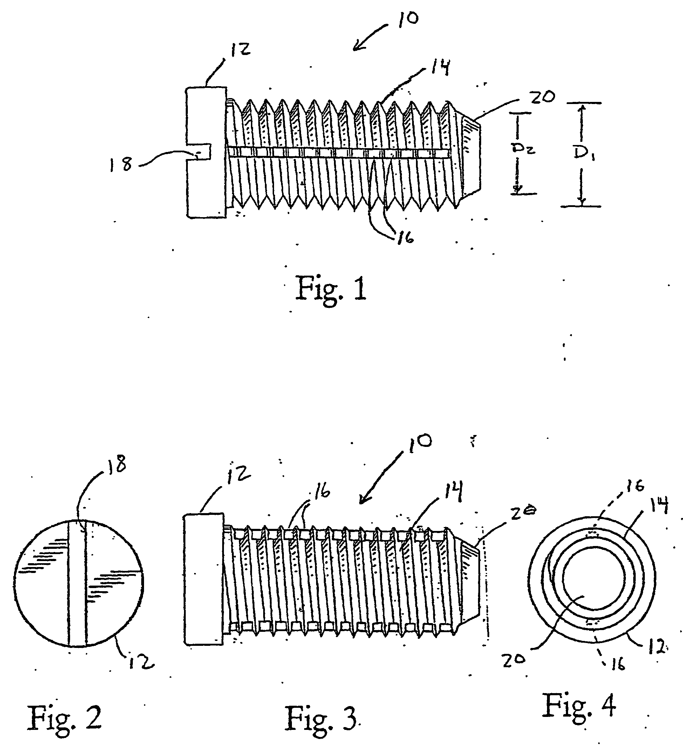

Referring initially to Figures 1-4, a self-locking threaded fastener 10 is illustrated in accordance with a first embodiment of the present invention. The self-locking threaded fastener 10 is especially useful in bicycle components. For example, self-locking threaded fastener 10 can be used in the braking device disclosed in U.S. Patent No. 4,425,819. More specifically, self-locking threaded fastener 10 can be used instead of the adjustment screw (7) of the braking device in U.S. Patent No. 4,425,819. Of course, it will be apparent to those skilled in the art that self-locking threaded fastener 10 can be used as an adjustment screw in other bicycle components. For example, self-locking threaded fastener 10 can be used for the adjustment screw in Shimano Inc.'s new brake lever with integrated shifting device as well as for the adjustment screws of derailleurs.

Basically, self-locking threaded fastener 10 includes a head portion 12 and a threaded shaft portion 14 extending axially from head portion 12 to a free end. Threaded shaft portion 14 includes locking material 16 integrally formed therewith. This locking material 16 is designed to be deformed upon threading into a threaded hole of a mating member (not shown). This deformation of the locking material 16 causes a tight fit between the self-locking threaded fastener and the mating member with the threaded hole. As discussed below, in the preferred embodiment, a plurality of lines of locking material 16 are formed along the longitudinal length of the threaded shaft portion 14 of the threaded fastener 10.

Self-locking threaded fastener 10 is formed as a one-piece, unitary member from a suitable plastic material that carries out the self-locking aspect of the present invention. The plastic material of self-locking threaded fastener 10 should allow the self-locking threaded fastener 10 to be reused over and over again. Preferably, the plastic material of self-locking threaded fastener 10 is a nylon material with glass fibers embedded therein. More preferably, the nylon material has approximately 55% of the glass fibers of the total volume of the material. An example of a suitable material is a nylon/glass fiber product sold by Kanebo of Japan (Product No. MC112LG55C10).

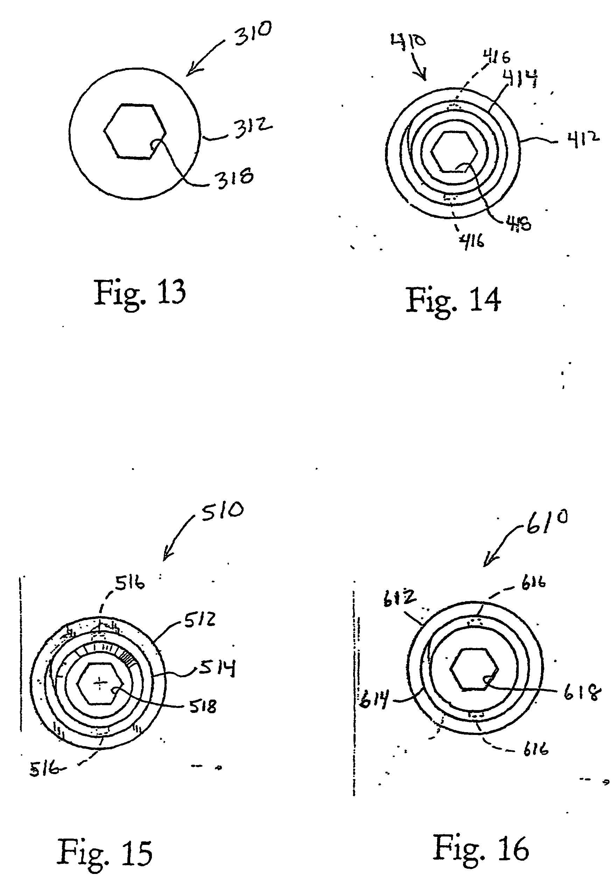

Head portion 12 is preferably provided with a tool receiving slot (coupling portion) 18 that is adapted to be rotated by a tool such as a screw driver (not shown). Tool receiving slot 18 is a transversely extending slot that passes through the center point of head portion 12. It will be apparent to those skilled in the art from this disclosure that tool receiving slot 18 can have a variety of shapes. More specifically, instead of the single long slot, as shown in Figure 2, tool receiving slot 18 can be a hexagonal bore as shown in Figure 13. Moreover, in a less preferred embodiment, the slot 18 can be in the form of a pair of crossing slots (Phillip head-type slot). In the case of the preferred embodiment in which threaded shaft portion 14 has a M4X0.7 thread configuration, the width of tool receiving slot 18 is preferably about 0.6 millimeters ± 0.1 millimeters. Of course, the width of tool receiving slot 18 will depend upon configurations of the head portion 12 and the threaded shaft portion 14. Preferably, the width of tool receiving slot 18 is designed such that a large tool cannot be utilized, which would apply an excessive torque thereto. In other words, since fastener 10 is constructed of a plastic material, it is important that an excessive torque is not applied to head portion 12.

When self-locking fastener 10 is being utilized in a shifting device, as mentioned above, it is preferable that the head portion 12 be a relatively flat disk-shaped member. Specifically, head portion 12, preferably, has an axial height and a maximum width or diameter that is less than approximately three times its axial height. Moreover, head portion 12 preferably has a maximum width that is not greater than approximately 1.5 millimeters of the outer diameter of threaded shaft portion 14. In the preferred embodiment, the maximum diameter or width of head portion 12 is approximately 5.0 millimeters ±0.1 millimeters. The axial height is approximately 1.6 millimeters ±0.1 millimeters. These dimensions are based upon the assumption that the threaded shaft portion 14 has M4X07 thread configuration. Of course, these dimensions of head portion 12 will change depending on the configuration of threaded shaft portion 12.

Threaded shaft portion 14 has a plurality of threads formed thereon, with threads having crests with outer diameters D₁ and roots with inner diameters D₂. The free end of threaded shaft portion 14 has a guide member 20 formed thereon. In this first embodiment, guide member 20 is a tapered portion having a frustoconical shape. Of course, many different shapes can be used for the guide member 20.

In the preferred embodiment, threaded shaft portion 14 has a M4X0.7-6g type of thread configuration. In other words, the outer diameters D₁ of the crests of threaded shaft portion 14 is approximately 3.8 millimeters, while the inner diameters D₂ of the roots of the threaded shaft portion 14 is approximately 3.2 millimeters. Of course, it will be apparent to those skilled in the art from this disclosure that other types of thread configurations can be utilized. In the preferred embodiment, the threaded shaft portion is approximately 9.6 millimeters ±0.1 millimeter.

Locking material 16 is formed at a plurality of locations in the roots of the threads of threaded shaft portion 14. More specifically, as seen in Figure 3, locking material 16 forms a pair of longitudinally extending lines of locking material 16. When threaded shaft portion 14 has two lines of locking material, the lines of locking material 16 are preferably shaped 180° apart. Of course, it will be apparent to those skilled in the art from this disclosure that only a single line of locking material 16 can be utilized or more than two lines of locking material 16 can also be utilized. Preferably, the lines of locking material 16 will be equally spaced about the periphery of the threaded shaft portion 14. In the case of a threaded shaft portion 14 having an outer diameter D₁ of 3.8 millimeters and an inner diameter D₂ of 3.2 millimeters, the locking material 16 extends radially from the roots of the threads approximately 0.75 millimeters. In other words, in the illustrated embodiment, the diameter of the threaded shaft portion 14 at the pair of lines of locking material 16 is approximately 3.5 millimeters. The lines of locking material 16 also preferably have widths of approximately 3.5 millimeters in the circumferential direction.

When self-locking threaded fastener 10 is being used as an adjusting screw in a shifting unit as mentioned above, the locking material should result in an initially threading torque of approximately 0.6 Nm or less. After the self-locking fastener is threaded and unthreaded five times, the subsequent threading or turning force should be approximately 0.05 Nm. In the preferred embodiment, the lines of locking material 16 extends along substantially the entire longitudinal length of threaded shaft portion 14. Of course, it will be apparent to those skilled in the art from this disclosure that the plurality of lines of locking material 16 do not need to extend the full length of threaded shaft portion 14. Preferably, at least 50% of the longitudinal length of the threaded shaft portion 14 has at least one line of locking material 16. The location of the locking material 16 will depend upon the particular application of self-locking threaded fastener 10.

### SECOND EMBODIMENT

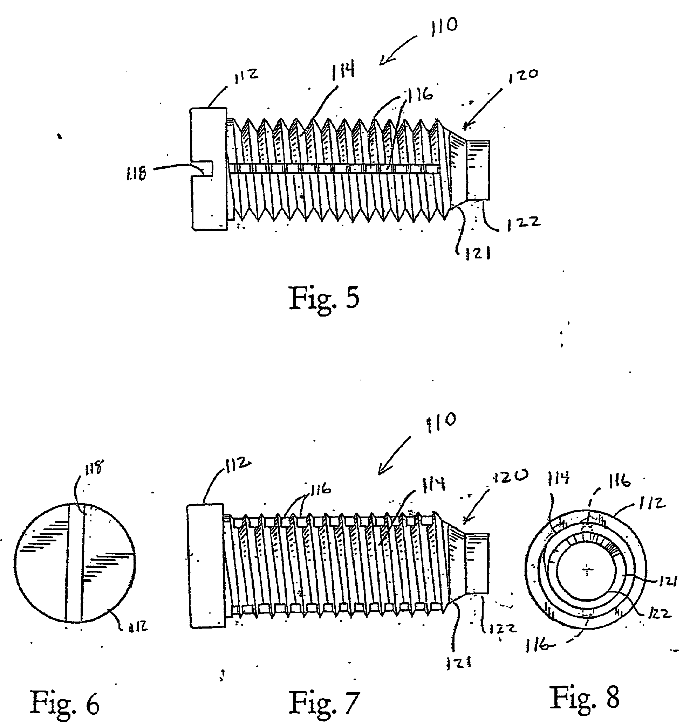

Referring now to Figures 5-8, a self-locking threaded fastener 110 is illustrated in accordance with the second embodiment of the present. Similar to the first embodiment, self-locking threaded fastener 110 basically includes a head portion 112 and a threaded shaft portion 114 with a pair of lines of locking material 116. This embodiment is similar to the prior embodiment, discussed above, except that the free end of threaded shaft portion 114 has been modified. In particular, the free end of the threaded shaft portion 114 is provided with a guide member 120 a having a tapered or frustoconical portion 121 and a cylindrical portion 122.

In view of the similarities between this embodiment and the prior embodiment, self-locking threaded fastener 110 of this embodiment will not be discussed in as much detail. Rather, it will be apparent to those skilled in the art from this disclosure that the various parts and descriptions of the prior embodiment applies to the similar or identical parts of this embodiment.

### THIRD EMBODIMENT

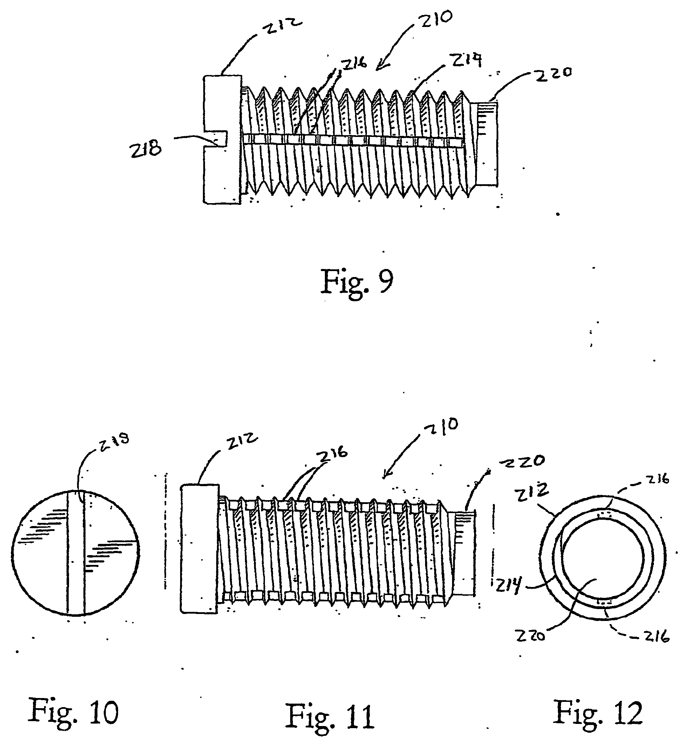

Referring now to Figures 9-12, a self-locking threaded fastener 210 is illustrated in accordance with the third embodiment of the present. Similar to the first embodiment, self-locking threaded fastener 210 basically includes a head portion 212 and a threaded shaft portion 214 with a pair of lines of locking material 216. This embodiment is similar to the prior embodiments, discussed above, except that the free end of threaded shaft portion 214 has been modified. In particular, the free end of threaded shaft portion 214 is provided with a guide member 220 having an unthreaded cylindrical configuration. The guide member 220 has a diameter that is no greater than the root diameter of threaded shaft portion 214.

In view of the similarities between this embodiment and the prior embodiments, self-locking threaded fastener 210 of this embodiment will not be discussed in as much detail. Rather, it will be apparent to those skilled in the art from this disclosure that the various parts and descriptions of the prior embodiments apply to the similar or identical parts of this embodiment.

### FOURTH EMBODIMENT

Referring now to Figure 13, a self-locking threaded fastener 310 is illustrated in accordance with the fourth embodiment of the present. Self locking threaded fastener 310 basically includes a head portion 312 and a threaded shaft portion (not shown). The threaded shaft portion of self-locking threaded fastener 310 can have the configuration of the threaded shaft portion of any of the preceding embodiments. This embodiment is similar to the prior embodiments, discussed above, except that the head portion 312 has been modified to have a hexagonal bore 318.

In view of the similarities between this embodiment and the prior embodiments, this embodiment of self locking threaded fastener 310 will not be discussed or illustrated in as much detail. Rather, it will be apparent to those skilled in the art from this disclosure that the various parts and descriptions of the prior embodiments apply to the similar or identical parts of this embodiment.

### FIFTH EMBODIMENT

Referring now to Figure 14, a self-locking threaded fastener 410 is illustrated in accordance with the fifth embodiment of the present. Self-locking threaded fastener 410 basically includes a head portion 412 and a threaded shaft portion 414 with lines of locking material 416. The head portion 412 of self-locking threaded fastener 410 does not have a tool receiving slot or bore. Threaded shaft portion 414 of self-locking threaded fastener 410, on the other hand, has an axially extending hexagonal bore 418 for receiving a tool therein. Threaded shaft portion 414 of self-locking threaded fastener 410 has the same configuration of the threaded shaft portion of the first embodiment discussed above.

In view of the similarities between this embodiment and the prior embodiments, self-locking threaded fastener 410 of this embodiment will not be discussed in as much detail. Rather, it will be apparent to those skilled in the art from this disclosure that the various parts and descriptions of the prior embodiment applies to the similar or identical parts of this embodiment.

### SIXTH EMBODIMENT

Referring now to Figure 15, a self-locking threaded fastener 510 is illustrated in accordance with the sixth embodiment of the present. Self-locking threaded fastener 510 basically includes a head portion 512 and a threaded shaft portion 514 with lines of locking material 516. The head portion 512 of self-locking threaded fastener 510 does not have a tool receiving slot or bore. Threaded shaft portion 514 of self-locking threaded fastener 510, on the other hand, has an axially extending hexagonal bore 518 for receiving a tool therein. Threaded shaft portion 514 of self-locking threaded fastener 510 has the same configuration of the threaded shaft portion of the second embodiment discussed above.

In view of the similarities between this embodiment and the prior embodiments, self-locking threaded fastener 510 of this embodiment will not be discussed in as much detail. Rather, it will be apparent to those skilled in the art from this disclosure that the various parts and descriptions of the prior embodiment applies to the similar or identical parts of this embodiment.

### SEVENTH EMBODIMENT

Referring now to Figure 16, a self-locking threaded fastener 610 is illustrated in accordance with the seventh embodiment of the present. Self-locking threaded fastener 610 basically includes a head portion 612 and a threaded shaft portion 614 with lines of locking material 616. The head portion 612 of self-locking threaded fastener 610 does not have a tool receiving slot or bore. Threaded shaft portion 614 of self-locking threaded fastener 610, on the other hand, has an axially extending hexagonal bore 618 for receiving a tool therein. Threaded shaft portion 614 of self-locking threaded fastener 610 has the same configuration of the threaded shaft portion of the third embodiment discussed above.

In view of the similarities between this embodiment and the prior embodiments, self-locking threaded fastener 610 of this embodiment will not be discussed in as much detail. Rather, it will be apparent to those skilled in the art from this disclosure that the various parts and descriptions of the prior embodiment applies to the similar or identical parts of this embodiment.

While several embodiments have been chosen to illustrate the present invention, it will be apparent to those skilled in the art from this disclosure that various changes and modifications can be made herein without departing from the scope of the invention as defined in the appended claims. Furthermore, the foregoing description of the embodiments according to the present invention are provided for illustration only, and not for the purpose of limiting the invention as defined by the appended claims and their equivalents.

## Claims

1. A self-locking threaded fastener (10, 110, 210, 310, 410, 510, 610), comprising:
a head portion (12,112,212,312,412, 512,612); and
a plastic shaft portion (14, 114, 214, 314, 414, 514, 614) extending from said head portion to a free end, said plastic shaft portion having threads formed thereon, said threads having crests with outer diameters, roots with inner diameters, and locking material (16, 116, 216, 316, 416, 516, 616) integrally formed as a one-piece, unitary part of said plastic shaft portion,
**characterized in that**
said locking material (16, 116, 216, 316, 416, 516, 616) is longitudinally arranged along said shaft portion (14, 114, 214, 314, 414, 514, 614) extending outwardly from at least one of said roots of said threads to form a line of said locking material (16, 116, 216, 316, 416, 516, 616) and being separated by said crests of said threads.

2. A self-locking threaded fastener (10, 110, 210, 310, 410, 510, 610) according to claim 1, wherein
said head portion (12, 112, 212, 312, 412, 512, 612) is integrally formed as a one-piece, unitary part of said plastic shaft portion (14, 114, 214, 314, 414, 514, 614).

3. A self-locking threaded fastener according to claim 1 or 2, further comprising a coupling portion (18, 118, 218, 318, 418, 518, 618) formed on one of said head and shaft portions to be rotated by a tool.

4. A self-locking threaded fastener according to any of the preceding claims, wherein said coupling portion (18, 118, 218, 318, 418, 518, 618) is disposed on said head portion (12, 112, 212, 312, 412, 512, 612).

5. A self-locking threaded fastener according to any of the preceding claims 1 to 3, wherein
said coupling portion (18, 118, 218, 318, 418, 518, 618) is disposed on said free end of said shaft portion (16, 116, 216, 316, 416, 516, 616).

6. A self-locking threaded fastener according to any of the preceding claims, wherein said coupling portion (18, 118, 218) has a transversely extending slot passing through a center point of said coupling portion.

7. A self-locking threaded fastener according to any of the preceding claims 1 to 5, wherein
said coupling portion (318, 418, 518, 618) has a hexagonal recess to receive a hexagonal portion of the tool.

8. A self-locking threaded fastener according to any of the preceding claims, wherein said locking material is formed at a plurality of locations in said roots of said threads.

9. A self-locking threaded fastener according to claim 1, wherein
said line of said locking material extends along at least fifty percent of the longitudinal length of said shaft portion.

10. A self-locking threaded fastener according to claim 91, wherein
said line of said locking material extends along substantially the entire longitudinal length of said shaft portion.

11. A self-locking threaded fastener according to any of the preceding claims 1 to 8, wherein
said locking material (16, 116, 216, 316, 416, 516, 616) is longitudinally arranged along said shaft portion in said roots of said threads to form a plurality of lines of said locking material.

12. A self-locking threaded fastener according to any of the preceding claims, wherein said free end of said shaft portion has a guide member (20, 120, 220, 320, 420, 520, 620) formed thereon.

13. A self-locking threaded fastener according to claim 12, wherein said guide member includes a tapered portion (20, 121).

14. A self-locking threaded fastener according to claim 12, wherein said guide member includes an unthreaded cylindrical portion (122, 220) with a diameter that is no greater than said inner diameters of said roots of said threads.

15. A self-locking threaded fastener according to any of the preceding claims, wherein said head portion has an axial height and a maximum width that is less than approximately three times said axial height.

16. A self-locking threaded fastener according to any of the preceding claims, wherein said head portion has a maximum width that is not greater than approximately 1.5 millimeter of said outer diameters of said crests of said threads.

17. A self-locking threaded fastener according to claim 11, wherein said shaft portion has a circumference with said lines of said locking material being equally spaced apart about said circumference of said shaft portion.

18. A self-locking threaded fastener according to any of the preceding claims, wherein said head and shaft portions are formed of a nylon material with glass fibers.

19. A self-locking threaded fastener according to claim 18, wherein said glass fibers are approximately 55% of said nylon material by volume.

## Patentansprüche

1. Selbsthemmendes, mit Gewinde versehenes Befestigungselement (10, 110, 210, 310, 410, 510, 610), umfassend:
einen Kopfabschnitt (12, 112, 212, 312, 412, 512, 612) und
einen sich vom Kopfabschnitt zu einem freien Ende erstreckenden Kunststoff-Schaftabschnitt (14, 114, 214, 314, 414, 514, 614), wobei der Kunststoffschaftabschnitt auf sich ausgebildete Windungen besitzt, wobei die Windungen Kanten mit einem Außendurchmesser, Kerben mit einem Innendurchmesser und Hemm-Material (16, 116, 216, 316, 416, 516, 616), das integral als ein einstückiges, einheitliches Teil des Kunststoffschaftabsschnitts ausgebildet ist, besitzen,
**dadurch gekennzeichnet, dass**
das Hemm-Material (16, 116, 216, 316, 416, 516, 616) in Längsrichtung entlang des Schaftabschnitts (14, 114, 214, 314, 414, 514, 614) angeordnet ist und sich von wenigstens einer der Kerben der Windungen nach außen erstreckt, um ein Band des Hemm-Materials (16, 116, 216, 316, 416, 516, 616) zu bilden und durch die Kanten der Windungen geteilt zu sein.

2. Selbsthemmendes, mit Gewinde versehenes Befestigungselement (10, 110, 210, 310, 410, 510, 610) nach Anspruch 1, wobei
der Kopfabschnitt (12, 112, 212, 312, 412, 512, 612) integral als ein einstückiges, einheitliches Teil des Kunststoffschaftabschnitts (14, 114, 214, 314, 414, 514, 614) ausgebildet ist.

3. Selbsthemmendes, mit Gewinde versehenes Befestigungselement (10, 110, 210, 310, 410, 510, 610) nach Anspruch 1 oder 2, das desweiteren einen Kopplungsabschnitt (18, 118, 218, 318, 418, 518, 618) aufweist, der auf einem Element aus der Gruppe bestehend aus dem Kopf- und dem Schaftabschnitt ausgebildet ist, um von einem Werkzeug gedreht zu werden.

4. Selbsthemmendes, mit Gewinde versehenes Befestigungselement nach einem der vorhergehenden Ansprüche, wobei der Kopplungsabschnitt (18, 118, 218, 318, 418, 518, 618) auf dem Kopfabschnitt (12, 112, 212, 312, 412, 512, 612) angeordnet ist.

5. Selbsthemmendes, mit Gewinde versehenes Befestigungselement nach einem der vorhergehenden Ansprüche 1 bis 3, wobei der Kopplungsabsschnitt (18, 118, 218, 318, 418, 518, 618) auf dem freien Ende des Schaftabschnitts (16, 116, 216, 316, 416, 516, 616) angeordnet ist.

6. Selbsthemmendes, mit Gewinde versehenes Befestigungselement nach einem der vorhergehenden Ansprüche, wobei der Kopplungsabschnitt (18, 118, 218) einen sich in Querrichtung erstreckenden Schlitz aufweist, der durch einen Mittenpunkt des Kopplungsabschnitts verläuft.

7. Selbsthemmendes, mit Gewinde versehenes Befestigungselement nach einem der vorhergehenden Ansprüche 1 bis 5, wobei der Kopplungsabschnitt (318, 418, 518, 618) eine hexagonale Vertiefung aufweist, um einen hexagonalen Abschnitt des Werkzeugs aufzunehmen.

8. Selbsthemmendes, mit Gewinde versehenes Befestigungselement nach einem der vorhergehenden Ansprüche, wobei das Hemm-Material an einer Mehrzahl von Stellen in den Kerben der Windungen ausgebildet ist.

9. Selbsthemmendes, mit Gewinde versehenes Befestigungselement nach Anspruch 1, wobei sich das Band des Hemm-Materials entlang von wenigstens fünfzig Prozent der longitudinalen Länge des Schaftabschnitts erstreckt.

10. Selbsthemmendes, mit Gewinde versehenes Befestigungselement nach Anspruch 1, wobei sich das Band des Hemm-Materials im wesentlichen entlang der gesamten longitudinalen Länge des Schaftabschnitts erstreckt.

11. Selbsthemmendes, mit Gewinde versehenes Befestigungselement nach einem der vorhergehenden Ansprüche 1 bis 8, wobei das Hemm-Material (16, 116, 216, 316, 416, 516, 616) in Längsrichtung entlang des Schaftabsschnitts in den Kerben der Windungen angeordnet ist, um eine Mehrzahl von Bändern des Hemm-Materials zu bilden.

12. Selbsthemmendes, mit Gewinde versehenes Befestigungselement nach einem der vorhergehenden Ansprüche, wobei das freie Ende des Schaftabschnitts ein auf ihm ausgebildetes Führungselement (20, 120, 220, 320, 420, 520, 620) besitzt.

13. Selbsthemmendes, mit Gewinde versehenes Befestigungselement nach Anspruch 12, wobei das Führungselement einen sich verjüngenden Abschnitt (20, 121) umfasst.

14. Selbsthemmendes, mit Gewinde versehenes Befestigungselement nach Anspruch 12, wobei das Führungselement einen zylindrischen Abschnitt (122, 220) ohne Gewinde mit einem Durchmesser, der nicht größer als der Innendurchmesser der Kerben der Windungen ist, umfasst.

15. Selbsthemmendes, mit Gewinde versehenes Befestigungselement nach einem der vorhergehenden Ansprüche, wobei der Kopfabschnitt eine axiale Höhe und eine maximale Breite, die kleiner als ungefähr die dreifach axiale Höhe ist, besitzt.

16. Selbsthemmendes, mit Gewinde versehenes Befestigungselement nach einem der vorhergehenden Ansprüche, wobei der Kopfabschnitt eine maximale Breite besitzt, die nicht größer als ungefähr 1,5 mm des Außendurchmesser von den Kanten der Windungen ist.

17. Selbsthemmendes, mit Gewinde versehenes Befestigungselement nach Anspruch 11, wobei der Schaftabschnitt einen Umfang hat, wobei die Bänder des Hemm-Materials um den Umfang des Schaftabschnitts gleich von einander beabstandet sind.

18. Selbsthemmendes, mit Gewinde versehenes Befestigungselement nach einem der vorhergehenden Ansprüche, wobei der Kopf- und der Schaftabschnitt aus einem Nylonmaterial mit Glasfasern ausgebildet sind.

19. Selbsthemmendes, mit Gewinde versehenes Befestigungselement nach Anspruch 18, wobei die Glasfasern ungefähr 55 Vol.-% des Nylonmaterials einnehmen.

## Revendications

1. Fixation filetée autobloquante (10, 110, 210, 310, 410, 510, 610), comprenant :
une partie de tête (12, 112, 212, 312, 412, 512, 612) ; et
une partie d'arbre en plastique (14, 114, 214, 314, 414, 514, 614) s'étendant de ladite partie de tête à une extrémité libre, ladite partie d'arbre en plastique ayant des filets formés sur celle-ci, lesdits filets ayant des sommets avec des diamètres externes, des fonds avec des diamètres internes, et un matériau bloquant (16, 116, 216, 316, 416, 516, 616) formé intégralement en tant que partie d'une pièce unitaire de ladite partie d'arbre en plastique,
**caractérisée en ce que**
ledit matériau bloquant (16, 116, 216, 316, 416, 516, 616) est agencé longitudinalement le long de ladite partie d'arbre (14, 114, 214, 314, 414, 514, 614) s'étendant vers l'extérieur depuis au moins l'un desdits fonds desdits filets pour former une ligne dudit matériau bloquant (16, 116, 216, 316, 416, 516, 616) et étant séparé par lesdits sommets desdits filets.

2. Fixation filetée autobloquante (10, 110, 210, 310, 410, 510, 610) selon la revendication 1, dans laquelle
ladite partie de tête (12, 112, 212, 312, 412, 512, 612) est formée intégralement en tant que partie d'une pièce unitaire de ladite partie d'arbre en plastique (14, 114, 214, 314, 414, 514, 614).

3. Fixation filetée autobloquante selon la revendication 1 ou 2, comprenant en outre une partie de couplage (18, 118, 218, 318, 418, 518, 618) formée sur l'une desdites parties de tête et d'arbre destinée à être mise en rotation par un outil.

4. Fixation filetée autobloquante selon l'une quelconque des revendications précédentes, dans laquelle ladite partie de couplage (18, 118, 218, 318, 418, 518, 618) est disposée sur ladite partie de tête (12, 112, 212, 312, 412, 512, 612).

5. Fixation filetée autobloquante selon l'une quelconque des revendications 1 à 3, dans laquelle
ladite partie de couplage (18, 118, 218, 318, 418, 518, 618) est disposée sur ladite extrémité libre de ladite partie d'arbre (16, 116, 216, 316, 416, 516, 616).

6. Fixation filetée autobloquante selon l'une quelconque des revendications précédentes, dans laquelle
ladite partie de couplage (18, 118, 218) a une fente s'étendant transversalement passant par un point central de ladite partie de couplage.

7. Fixation filetée autobloquante selon l'une quelconque des revendications précédentes 1 à 5, dans laquelle
ladite partie de couplage (318, 418, 518, 618) a un évidement hexagonal pour recevoir une partie hexagonale de l'outil.

8. Fixation filetée autobloquante selon l'une quelconque des revendications précédentes, dans laquelle
ledit matériau bloquant est formée à une pluralité d'emplacements dans lesdits fonds desdits filets.

9. Fixation filetée autobloquante selon la revendication 1, dans lequel
ladite ligne dudit matériau bloquant s'étend sur au moins cinquante pour cent de la longueur longitudinale de ladite partie d'arbre.

10. Fixation filetée autobloquante selon la revendication 1, dans laquelle
ladite ligne dudit matériau bloquant s'étend le long de sensiblement toute la longueur longitudinale de ladite partie d'arbre.

11. Fixation filetée autobloquante selon l'une quelconque des revendications précédentes 1 à 8, dans laquelle
ledit matériau bloquant (16, 116, 216, 316, 416, 516, 616) est agencé longitudinalement le long de ladite partie d'arbre dans lesdits fonds desdits filets pour former une pluralité de lignes dudit matériau bloquant.

12. Fixation filetée autobloquante selon l'une quelconque des revendications précédentes, dans laquelle
ladite extrémité libre de ladite partie d'arbre a un élément de guidage (20, 120, 220, 320, 420, 520, 620) formé sur celle-ci.

13. Fixation filetée autobloquante selon la revendication 12, dans laquelle
ledit élément de guidage comprend une partie effilée (20, 121).

14. Fixation filetée autobloquante selon la revendication 12, dans laquelle
ledit élément de guidage comprend une partie cylindrique non filetée (122, 220) avec un diamètre qui n'est pas supérieur auxdits diamètres internes desdits fonds desdits filets.

15. Fixation filetée autobloquante selon l'une quelconque des revendications précédentes, dans laquelle ladite partie de tête a une hauteur axiale et une largeur maximale qui est inférieure à approximativement trois fois ladite hauteur axiale.

16. Fixation filetée autobloquante selon l'une quelconque des revendications précédentes, dans laquelle ladite partie de tête a une largeur maximale qui n'est pas supérieure à approximativement 1,5 millimètre desdits diamètres externes desdits sommets desdits filets.

17. Fixation filetée autobloquante selon la revendication 11, dans laquelle
ladite partie d'arbre a une circonférence, lesdites lignes dudit matériau bloquant étant uniformément espacées autour de ladite circonférence de ladite partie d'arbre.

18. Fixation filetée autobloquante selon l'une quelconque des revendications précédentes, dans laquelle lesdites parties de tête et d'arbre sont formées d'un matériau de nylon avec des fibres de verre.

19. Fixation filetée autobloquante selon la revendication 18, dans laquelle
lesdites fibres de verre sont approximativement 55 % dudit matériau de nylon en volume.
